# EUROPEAN PATENT APPLICATION

(11) **EP 1 918 623 A2**
(43) Date of publication of application: **07.05.2008**
(21) Application number: 07254073.5
(22) Date of filing: 15.10.2007
(51) Int. Cl.: F16K 27/06

(54) **Valve Assembly**

(30) Priority: 26.10.2006 GB 0621281
(71) Applicant: Altecnic Ltd, Hixon Staffordshire ST18 0PF (GB)
(72) Inventor: Gizzi, Stuart Michael, Hixon Staffordshire ST18 0PF (GB)
(74) Representative: Blower, Timothy John

(57) **Abstract**

A valve assembly 10 with a body 12 which locates an isolator ball valve 24. Downstream of the valve 24 a cylindrical mesh filter 32 is provided. Downstream of the filter 32 is a flow regulation unit 34. The filter 32 and flow regulation unit 34 can be selectively removed from the body 12 for cleaning and maintenance.

## Description

This invention concerns improvements in or relating to valve assemblies.

Isolator valves are often required to permit a water supply or water flow to be turned off. In some instances it is desirable to provide a filter in a water flow or supply to catch any entrapped particles. It may also be required to include a check valve which only permits flow in one direction, and therefore prevents back flow. Furthermore a flow regulator may be required which restricts the maximum flow, thereby providing protection to appliances and other installations.

According to the present invention there is provided a valve assembly, the assembly including a body with an inlet and an outlet, and a structure defining a flow path from the inlet to the outlet, the assembly also including an isolator valve located in the flow path to selectively open or close same, and located in the flow path downstream of the isolator valve, a filter and a flow regulation unit, which unit can include a check valve and/or a flow regulator.

The flow regulation unit may be located downstream of the filter. The flow regulation unit may be retained in the body by the filter.

The filter and the flow regulation unit may be selectively removable from the body.

The assembly may include a closure member selectively mountable on the body such that when mounted on the body the closure member retains the filter and flow regulation units within the body, and when the closure member is removed from the body, the filter and flow regulation unit can be removed from the body.

A plurality of different flow regulation units may be provided to permit one with required characteristics to be selectively located in the body.

The isolator valve may be a ball valve.

Connecting formations may be provided at the inlet and outlet.

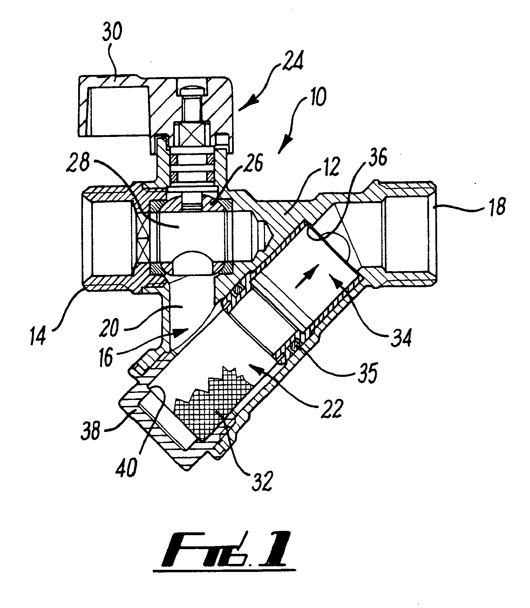

An embodiment of the present invention will now be described by way of example only and with reference to the accompanying drawing which is a diagrammatic cross sectional side view of a valve assembly according to the invention.

The drawings show a valve assembly 10 with a body 12. The body 12 has an inlet 14 with a flow path 16 leading to an outlet 18 which is coaxial with the inlet 14. The flow path 16 as shown in the drawing moves horizontally to the right from the inlet 14 then turns downwardly to a passage 20, leading to a chamber 22. The chamber 22 is inclined upwardly and towards the right as shown in the drawing. The upper end of the chamber 22 connects with the outlet 18.

Located just to the right of the inlet 14 as shown and above the passage 20, is a conventional isolator ball valve 24. The valve 24 has a ball 26 with a through passage 28 which extends horizontally and downwardly to the passage 20. In an open condition as shown the passage 28 is aligned with the inlet 14. If the handle 30 of the valve 24 is turned through 90°, the passage 28 will no longer be aligned with the inlet 14 and the valve 24 will therefore be closed.

Located in a lower end of the chamber 22 is a filter 32 in the form of a cylindrical mesh. A flow regulation unit 34 is located in an upper part of the chamber 22 and includes a check valve and a flow regulator. The chamber 22 is dimensioned to receive the filter 32 and flow regulation unit 34 in a sliding fit, and an O-ring 35 is provided around a lower part of the unit 34 to provide a seal against the walls of the chamber 22. Shoulders 36 are provided at an upper end of the chamber 22 against which an upper end of the flow regulation unit 34 engages.

The lower part of the chamber 22 is closed by a closure 36 which is mounted to the body 12 by a screw thread so as to be selectively movable therefrom. Shoulders 40 are provided on the inside of the closure 38, against which shoulders 40 the lower end of the filter 32 engages. The inlet 14 and outlet 18 can be provided with 15mm compression fittings for ease of connection in a water supply pipe. It is to be realised that the flow regulation unit can comprise any required combination of check valves and/or flow regulators as required, and if one of a check valve or flow regulator is not required, they can be omitted from the unit.

There is thus described a filter assembly with a number of advantageous features. The assembly permits an isolator valve, filter, and check valve and/or flow regulator to be included in a single assembly. By removal of the closure, the filter can readily be removed for cleaning or replacement. Also the flow regulation unit can be removed for cleaning, testing and/or maintenance, or to be replaced by a unit which may be of different characteristics.

Various modifications may be made without departing from the scope of the invention. For example, the body may have a different shape. The filter and/or flow regulation unit could be of a different shape and/or type.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A valve assembly, the assembly including a body with an inlet and an outlet, and a structure defining a flow path from the inlet to the outlet, the assembly also including an isolator valve located in the flow path to selectively open or close same, and located in the flow path downstream of the isolator valve, a filter and a flow regulation unit, which unit can include a check valve and/or a flow regulator.

2. An assembly according to claim 1, in which the flow regulation unit is located downstream of the filter.

3. An assembly according to claims 1 or 2, in which the flow regulation unit is retained in the body by the filter.

4. An assembly according to any of the preceding claims, in which the filter and the flow regulation unit are selectively removable from the body.

5. An assembly according to claim 4, in which the assembly includes a closure member selectively mountable on the body such that when mounted on the body the closure member retains the filter and flow regulation units within the body, and when the closure member is removed from the body, the filter and flow regulation unit can be removed from the body.

6. An assembly according to any of the preceding claims, in which a plurality of different flow regulation units are provided to permit one with required characteristics to be selectively located in the body.

7. An assembly according to any of the preceding claims, in which the isolator valve is a ball valve.

8. An assembly according to any of the preceding claims, in which connecting formations are provided at the inlet and outlet.

9. A valve assembly substantially as hereinbefore described and with reference to the accompanying drawing.

10. Any novel subject matter or combination including novel subject matter disclosed herein, whether or not within the scope of or relating to the same invention as any of the preceding claims.
